**Europäisches Patentamt**

**European Patent Office**

**Office européen des brevets**

(19)

(11) Veröffentlichungsnummer: **0 310 989 B1**

# EUROPÄISCHE PATENTSCHRIFT

(12)

(45) Veröffentlichungstag der Patentschrift: **15.04.92**

(51) Int. Cl.⁵: **H02K 15/02**

(21) Anmeldenummer: **88116314.1**

(22) Anmeldetag: **03.10.88**

(54) Verfahren und Vorrichtung zur Abnahme von Blechen von einem Stapel.

(30) Priorität: **07.10.87 DE 3733813**
**23.10.87 DE 3735870**

(43) Veröffentlichungstag der Anmeldung:
**12.04.89 Patentblatt 89/15**

(45) Bekanntmachung des Hinweises auf die
Patenterteilung:
**15.04.92 Patentblatt 92/16**

(84) Benannte Vertragsstaaten:
**DE FR GB IT**

(56) Entgegenhaltungen:
**DD-B- 151 590**
**DE-A- 2 019 924**
**DE-A- 2 832 210**
**DE-A- 2 907 261**

(73) Patentinhaber: **STATOMAT-GLOBE Machinen-**
**fabrik GmbH**
**An der Rosenhelle 4**
**W-6369 Niederdorfelden(DE)**

(72) Erfinder: **Mörschel, Richard**
**Grosse Gasse 7**
**W-6369 Nidderau 4(DE)**
Erfinder: **Ludwig, Hagen**
**Hermann-Löns-Strasse 5**
**W-6457 Maintal 1(DE)**

(74) Vertreter: **Jochem, Bernd, Dipl.-Wirtsch.-Ing.**
**Staufenstrasse 36 Postfach 17 41 09**
**W-6000 Frankfurt/Main(DE)**

**Beschreibung**

Die Erfindung betrifft ein Verfahren zur Abnahme von Blechen von einem Stapel nach dem Oberbegriff des Anspruchs 1 und eine Vorrichtung zur Durchführung dieses Verfahrens. Sie bezieht sich insbesondere auf das Paketieren von Stator- und Rotorblechen für elektrische Maschinen.

Neben Verfahren zum drucklosen Paketieren von Blechen gemäß z. B. DE-OS 29 49 230 und DE-OS 31 47 034, bei denen eine bestimmte Anzahl Bleche nur unter dem Eigengewicht des Stapels abgenommen wird, ist es zur Erzielung einer größeren Genauigkeit der Pakethöhe durch z.B. die DE-OS 20 19 924 und die DE-OS 29 07 261 bekannt, einen Blechstapel zwischen Druckplatten einzuspannen und durch ein mit Bezug auf eine der Druckplatten an einer bestimmten Stelle seitlich gegen den Stapel fahrendes Messer eine bestimmte Pakethöhe abzugreifen. Es ist dabei in der Praxis durch Vorbenutzung auch schon bekannt, zur Vermeidung von Toleranzen, die aus über den Umfang ungleichmäßig starken Blechen resultieren, zunächst eine halbe Pakethöhe abzugreifen, dieses halbe Blechpaket um 180° zu drehen, wieder mit dem Stapel zu vereinigen und dann erst das gesamte Blechpaket abzunehmen. Zu diesem Zweck sind bei der bekannten Ausführung an derjenigen Druckplatte, welche zusammen mit dem Messer das vom Stapel abzunehmende Blechpaket begrenzt, auf der Rückseite zwei unterschiedliche, der jeweiligen halben und ganzen Pakethöhe entsprechende Anschlagflächen ausgebildet, die in den beiden um 180° versetzten Drehwinkelstellungen der zusammen mit der ersten Pakethälfte gedrehten Druckplatte einzeln an einer bestimmten Abstützfläche des das Blechpaket aufnehmenden und vom Stapel weg transportierenden Paketierkopfs zur Anlage kommen.

Das mit der bekannten Vorrichtung ausgeführte Paketierverfahren hat den Nachteil, daß selbst bei einer minimalen Justierung des Abstands der Druckfläche der einen Druckplatte relativ zum Messer, wie sie wegen der sich addierenden Toleranzen der Dicke der verarbeiteten Bleche während der Fertigung einer Paketserie mit bestimmter Höhe erforderlich werden kann, die Produktion unterbrochen und die Abteilebene des Messers korrigiert werden muß. Auch beim Wechsel von einer Pakethöhe auf eine andere ist bisher zum Austausch der Druckplatte eine solche Produktionsunterbrechung notwendig. Außer diesem Zeitverlust und der Notwendigkeit, mit einer Vielzahl von Druckplatten mit unterschiedlichen Anschlagflächen arbeiten zu müssen, ergab sich daraus bisher die weitere Konsequenz, daß bei der gleichzeitigen Herstellung von mehreren verschiedenen Pakethöhen auch mehrere Paketiervorrichtungen jeweils mit einer Isoliervorrichtung zum Einsetzen von unterschiedlich langen Isolierstreifen in die Statoroder Rotornuten verkettet werden mußten, obgleich bei großer Nutenzahl die letzteren eine sehr viel längere Taktzeit haben als die Paketiervorrichtungen. Der Erfindung liegt daher die Aufgabe zugrunde, das bekannte Paketierverfahren und die Vorrichtung zu dessen Durchführung dahingehend zu verbessern, daß Justierungen und Änderungen der Pakethöhe ohne oder mit nur sehr kurzer Produktionsunterbrechung ausgeführt werden können.

Vorstehende Aufgabe wird verfahrensmäßig durch die im kennzeichnenden Teil des Anspruchs 1 angegebenen Maßnahmen gelöst. und die zur Durchführung dieses Verfahrens vorgeschlagene Vorrichtung ist im Patentanspruch 4 gekennzeichnet.

Die Erfindung bietet den Vorteil, daß unabhängig von Änderungen der Pakethöhe die Bleche immer zwischen denselben Druckplatten zusammengedrückt werden können, also die Produktion im Arbeitstakt oder mit nur minimaler Verzögerung weiterläuft, so daß auch eine einzige Paketiervorrichtung mit z. B. zwei Isoliervorrichtungen für unterschiedliche Pakethöhen verkettet werden kann.

Ein Ausführungsbeispiel der Erfindung wird nachstehend anhand der Zeichnung näher erläutert. Es zeigen:

Fig. **1A** und **1B**

einen senkrechten Schnitt durch den oberen Teil bzw. den sich daran anschließenden unteren Teil einer Verstelleinrichtung für mit einer Druckplatte einer Paketiervorrichtung zusammenwirkende Anschläge;

Fig. **2**

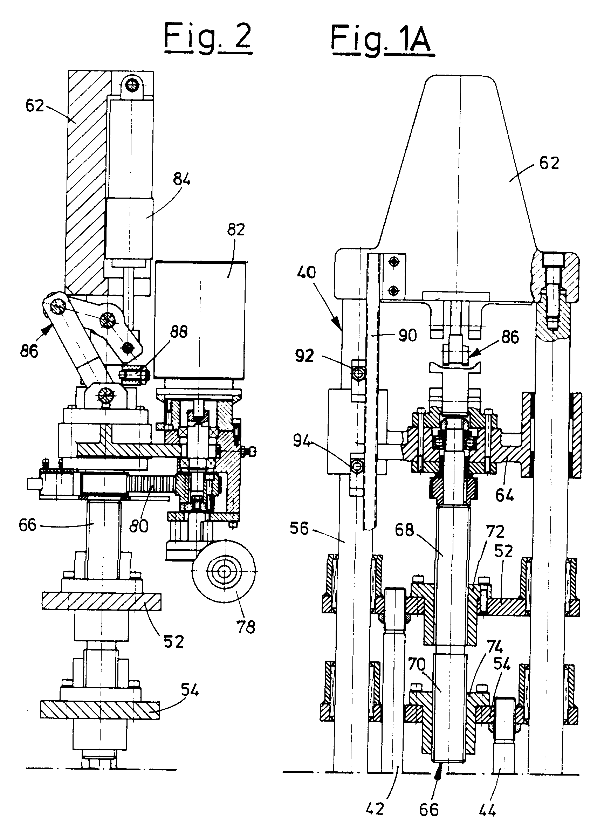

einen um 90° versetzten senkrechten Schnitt durch den oberen Teil der Verstelleinrichtung gemäß Fig. 1A;

Fig. **3**

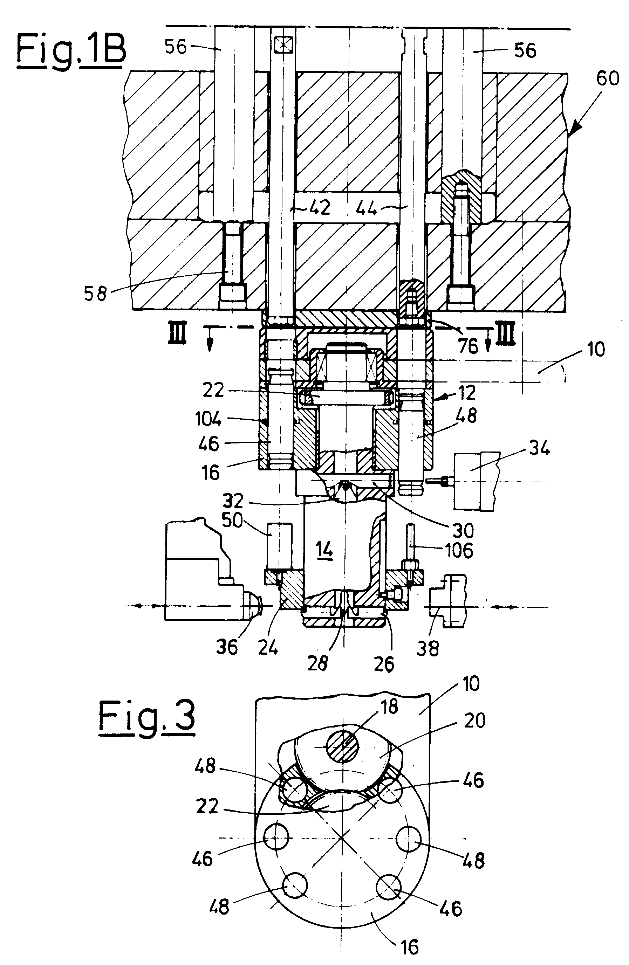

eine Schnittansicht gemäß Schnittlinie III-III in Fig. 1B;

Fig. **4**

eine Ansicht entsprechend Fig. 1B der Paketiervorrichtung in einer Stellung nach dem Abgreifen der ersten Hälfte eines Blechpakets;

Fig. **5**

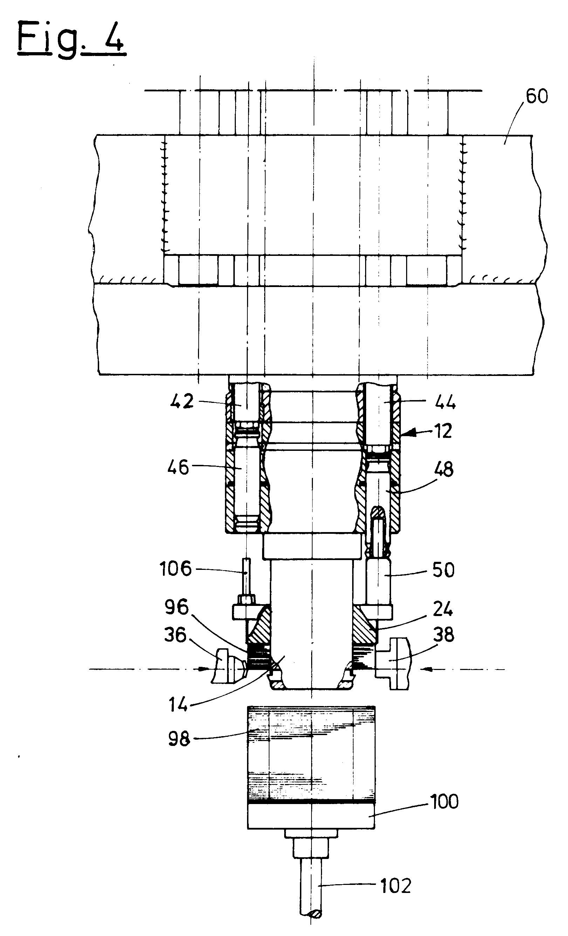

eine Ansicht der Paketiervorrichtung entsprechend Fig. 4 in einer Stellung beim Abgreifen der ganzen Höhe eines Blechpakets.

Die dargestellte Paketiervorrichtung hat im Beispielsfall einen in Fig. 1B strichpunktiert angedeuteten Rundtisch 10, der an seinem Umfang um 180° versetzt zwei Paketierköpfe 12 trägt, die durch Schaltbewegungen von 180° abwechselnd in die in Fig. 1A und 1B gezeigte Paketaufnahmestellung und eine nicht gezeigte Paketabladestellung gebracht werden. Jeder Paketierkopf 12 hat einen Aufnahmedorn 14 zur Aufnahem eines von einem Blechstapel abzuhebenden Blechpakets. Dieser Aufnahmedorn 14 ist an einem fest mit dem Rundtisch 10 verbundenen Führungsteil 16 um eine senkrechte Mittelachse drehbar gelagert, so daß er durch einen am Rundtisch 10 angebrachten Antriebsmotor über eine Fig. 3 gezeigte Welle 18 und ein Zahnradpaar 20, 22 schrittweise um 180° gedreht werden kann.

Auf dem Aufnahmedorn 14 sitzt axial verschieblich, aber relativ zu diesem undrehbar eine Druckplatte 24. Außerdem sind am unteren Ende des Aufnahmedorns 14 radial angeordnete Halteklinken 26 vorgesehen, die durch eine Feder 28 radial nach außen bis über den Außenumfang des Aufnahmedorns 14 vorgeschoben werden, so daß sie in dieser vorgeschobenen Stellung auf dem Dorn sitzende Bleche halten und am Heruntergleiten hindern. Beim Aufschieben von Blechen mit einer mittleren, zum Aufnahmedorn 14 passenden Bohrung von unten auf den Dorn werden die Halteklinken 16 radial einwärts federnd zurückgedrückt. Um auf dem Dorn sitzende Bleche von diesem wieder heruntergleiten zu lassen, sind im Inneren des Dorns radial und axial angeordnete Stößel 30, 32 verschieblich gelagert, die durch eine neben dem Paketierkopf 12 am Maschinenrahmen 60 gelagerte Zylinder-Kolben-Einheit 34 betätigt werden können und über Keilflächen auf die Halteklinken 26 wirken, so daß diese gegen die Wirkung der Feder 28 radial einwärts eingezogen werden.

Weiterhin befinden sich neben dem Aufnahmedorn 14 auf diametral gegenüberliegenden Seiten ein Abtrennmesser 36, wie es z.B. in der DE-OS 20 19 924 detailliert beschrieben ist, sowie eine Seitenstütze 38, an welcher sich die Bleche unter der Wirkung des seitlich gegen sie drückenden Messers 36 abstützen.

Die oberste Fläche des zusammen mit dem Rundtisch 10 verfahrbaren Paketierkopfs 12 befindet sich dort, wo in Fig. 1B die Schnittebene III-III eingetragen ist. In der gezeigten Stellung zum Aufnehmen eines Blechpakets liegt der Paketierkopf 12 in axialer Flucht mit einer in Fig. 1A und Fig. 1B oben gezeigten Verstelleinrichtung 40 für den Weg der Druckplatte 24 nach oben begrenzende Anschläge. Um die Druckplatte 24 jeweils in zwei unterschiedlichen axialen Stellungen, wie sie zum Abgreifen eines halben und eines ganzen Blechpakets erforderlich sind, abstützen zu können, sind zwei getrennte Anschläge 42 und 44 notwendig, die im Beispielsfall jeweils die Form einer Gruppe von drei auf einem gemeinsamen Kreisumfang angeordneten Anschlagstangen haben. Der Anordnung der Anschlagstangen 42 und 44 entspricht im Führungsteil 16 des Paketierkopfs 12 die Anordnung von zwei Gruppen von Zwischenbolzen 46 bzw. 48 gemäß Fig. 3, die mit den Anschlagstangen 42 bzw. 44 fluchten. Wie aus Fig. 3 ersichtlich, liegt jeder Anschlagstange 42 bzw. jedem mit dieser fluchtenden Zwischenbolzen 46 diametral gegenüber eine Anschlagstange 44 bzw. ein damit fluchtender Zwischenbolzen 48. Bei jeder Gruppe von Anschlagstangen 42 bzw. 44 beträgt der Winkelabstand z. B. einmal 90° und zweimal 135°, und jeweils in der Mitte des 90°-Teilungsabstands der Anschlagstangen einer Gruppe ist eine Anschlagstange der anderen Gruppe angeordnet. Diese Verteilung der Anschlagstangen 42, 44 und der Zwischenbolzen 46, 48 ermöglicht es, daß drei bolzenförmige Vorsprünge 50 auf der Oberseite der Druckplatte 24, welche dieselbe kreisförmige Anordnung wie eine der Dreiergruppen der Anschlagstangen 42 bzw. 44 oder der Zwischenbolzen 46 bzw. 48 haben, bei Drehung der Druckplatte 24 zusammen mit dem Aufnahmedorn 14 um 180° aus der Flucht mit den Anschlag stangen 42 und den Zwischenbolzen 46 in Flucht mit den Anschlagstangen 44 und den Zwischenbolzen 48 kommen.

Die oberen Enden der Anschlagstangen 42 sind an einem Schlitten 52 befestigt und die oberen Enden der Anschlagstangen 44 sind an einem Schlitten 54 festgelegt. Die Schlitten 52 und 54 sind an mehreren senkrecht angeordneten Führungssäulen 56 axial verschieblich geführt. Die Führungssäulen 56 sind an ihren unteren Enden mittels Befestigungsschrauben 58 am Maschinenrahmen 60 befestigt und am oberen Ende mit einem Querhaupt 62 verbunden. Über den Schlitten 52 und 54 sitzt ein Hauptschlitten 64 axial verschieblich auf den Führungssäulen 56. Letzterer ist über eine Verstellspindel 66 mit den beiden Schlitten 52 und 54 verbunden. Die Verstellspindel 66 hat zwei getrennte Gewindeabschnitte 68 und 70, von denen einer, im Beispielsfall der Gewindeabschnitt 68, eine doppelt so große Gewindesteigung hat wie der andere Gewindeabschnitt. Dies führt dazu, daß bei Drehung der Verstellspindel 66 um einen bestimmten Winkel der über eine undrehbare Gewindebüchse 72 mit dem Gewindeabschnitt 68 in Eingriff stehende Schlitten 52 einen doppelt so langen Verstellweg ausführt, wie der über eine undrehbare Gewindebüchse 74 mit dem anderen Gewindeabschnitt in Eingriff stehende Schlitten 54.

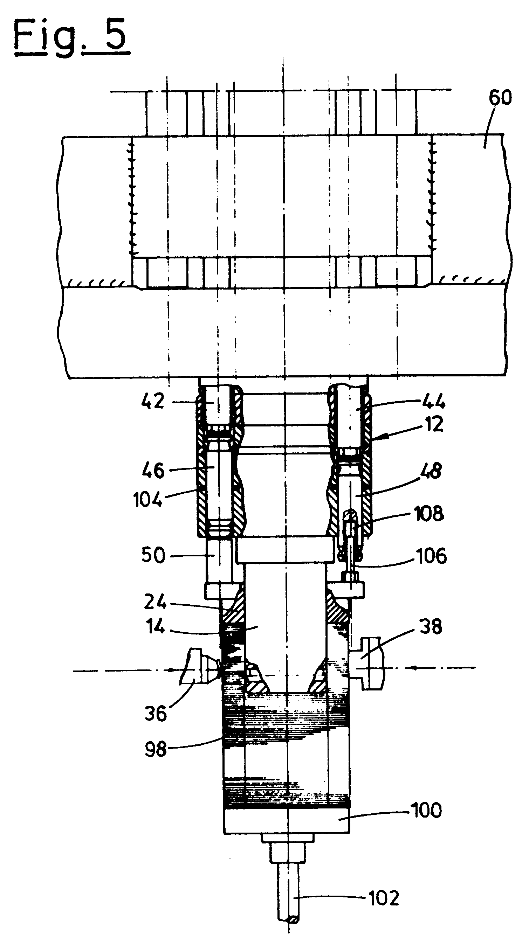

Fig. 1B zeigt die unteren Enden der Anschlagstangen 42 und 44 auf gleichem Niveau dicht oberhalb der obersten Fläche des Paketierkopfs 12, so daß sie in dieser nach oben zurückgezogenen Stellung die Drehung des Rundtischs 10 mit den beiden Paketierköpfen 12 nicht behindern. Aus Gründen der besseren maßlichen Anpassung zwischen Rundtisch 10 und Maschinenrahmen 60 ist an diesem eine in ihrer Dicke leicht anzupassende Flanschplatte 76 angeschraubt, welche mit Bohrungen für den Durchtritt der Anschlagstangen 42, 44 versehen ist und mit ihrer Unterkante dicht über der obersten Fläche des Paketierkopfs 12 liegt. Die in Fig. 1B gezeigte Stellung der unteren Enden der Anschlagstangen 42 und 44 nehmen diese nur in dem beim Einrichten der Maschine vorübergehend eingestellten Ausganszustand ein, welcher einer Pakethöhe Null der abzunehmenden Blechpakete entspricht. Auch für diesen Extremfall lassen sich die Anschlagstangen 42, 44 bis über die oberste Fläche des mit dem Rundtisch 10 beweglichen Paketierkopfs 12 zurückziehen. Andererseits erreichen die unteren Enden der Anschlagstangen 42, 44 bei der nur theoretischen Pakethöhe Null in ihrer unteren, die Druckplatte 24 abstützenden Stellung das niedrigste Niveau. Wird nun, ausgehend von diesem oder von dem in Fig. 1B gezeigten gemeinsamen Niveau die Verstellspindel 66 gedreht, während sie durch den Hauptschlitten 64 axial festgehalten wird, so werden wegen der um den Faktor 2 unterschiedlichen Gewindesteigungen der Gewindeabschnitte 68 und 70 die Anschlagstangen 42 doppelt so weit nach oben verstellt wie die Anschlagstangen 44, so daß zwischen den unteren Enden der Anschlagstangen 42 und 44 ein Niveauunterschied entsteht, wie in Fig. 4 und 5 dargestellt. Die auf das höhere Niveau nach oben zurückgezogenen Anschlagstangen 42 bilden dann eine Abstützung für die Druckplatte 24 während des Abgreifens einer vollen Pakethöhe, während die durch den Gewindeabschnitt 70 der Verstellspindel 66 nur halb so weit aus der Stellung nach Fig. 1B nach oben zurückgezogenen Anschlagstangen 44 die Druckplatte 24 beim Abgreifen einer halben Pakethöhe abstützen.

Die Verstellspindel 66 ist an ihrem oberen Ende drehbar, aber axial fest am Hauptschlitten 64 gelagert. Sie wird durch einen ebenfalls am Hauptschlitten 64 gelagerten Antriebsmotor 78 (siehe Fig. 2) mit Schneckengetriebe über einen Zahnriementrieb 80 angetrieben. Die Steuerung des Motors 78 erfolgt mittels eines mit Sensoren für die Drehwinkelstellung der Verstellspindel 66 versehenen Drehgebers 82, der gleichfalls am Hauptschlitten 64 gelagert ist.

Um die Anschlagstangen 42, 44 aus der zurückgezogenen Stellung nach Fig. 1B in die nach unten vorgeschobene, bei der Abstützung der Druckplatte 24 wirksame Stellung nach Fig. 4 und 5 zu bringen, wird der Hauptschlitten 64 durch eine Zylinder-Kolben-Einheit 84 über ein Kniehebelgetriebe 86 längs der Führungssäulen 56 nach unten gefahren, wobei er über die Verstellspindel 66 die Schlitten 52 und 54 mit den daran befestigten Anschlagstangen 42 bzw. 44 mitnimmt. Im Beispielsfall wird hierzu die an ihrem oberen Ende gelenkig gelagerte Zylinder-Kolben-Einheit 84 soweit verkürzt, daß sich die beiden das Kniehebelgetriebe 86 bildenden Hebel durch den Totpunkt ihrer Strecklage hindurch bis zur Anlage des unteren Hebels an einer einstellbaren Anschlagschraube 88 bewegen. Die Form der Hebel und die gegenseitige Anordnung der Lagerpunkte mit Bezug auf die gelenkige Lagerung der Zylinder-Kolben-Einheit 84 sind so gewählt, daß diese den Durchgang durch die Strecklage der Hebel in beiden Richtungen bewerkstelligen. Andererseits bietet das Kniehebelgetriebe 86 in Anlage an der Anschlagschraube 88, d.h. ein wenig jenseits seiner Strecklage, eine zuverlässige Abstützung für die von den Anschlagstangen 42 und 44 aufzunehmenden axialen Kräfte.

Am Querhaupt 62 können mittels einer daran befestigten Tragstange 90 ein oberer und ein unterer induktiver Geber 92 bzw. 94 angebracht sein, die als Sensoren zur Feststellung dienen, ob der Hauptschlitten 64 seine zurückgezogene obere Stellung oder die zur Abstützung der Druckplatte 24 notwendige, nach unten vorgeschobene Stellung einnimmt.

Fig. 4 und 5 zeigen die Vorrichtung beim Paketiervorgang. In der Stellung gemäß Fig. 4 ist soeben eine Hälfte 96 eines Blechpakets von einem Stapel 98 abgetrennt worden, während dieser zwischen der Druckplatte 24 und einer unteren Druckplatte 100 durch eine auf diese wirkende Zylinder-Kolben-Einheit 102 zusammengedrückt war. Die obere Druckplatte 24 hat sich dabei über die an ihrer Oberseite angebrachten drei bolzenförmigen Vorsprünge 50 an den drei Zwischenbolzen 48 abgestützt, diese wiederum an den mit ihnen fluchtenden Anschlagstangen 44, letztere über den Schlitten 54 und die Verstellspindel 66 am Hauptschlitten 64 und dieser schließlich über das an der Anschlagschraube 88 anliegende Kniehebelgetriebe 86 am Querhaupt 62, welches über die Führungssäulen 56 fest mit dem Maschinenrahmen verbunden ist.

Nach dem Abgreifen der ersten Hälfte 96 eines Blechpakets im zwischen den Druckplatten 24 und 100 zusammengedrückten Zustand des Stapels 98 mittels des Messers 36 wird die untere Druckplatte 100 gemäß Fig. 4 wieder abgesenkt, und es folgt dann nach dem Zurückziehen des Messers 36 radial nach außen - das halbe Blechpaket 96 wird jetzt auf den Halteklinken 26 gehalten - eine Drehung des Aufnahmedorns 14 mitsamt dem halben Blechpaket 96 und der Druckplatte 24 um 180°. Daraufhin fährt die untere Druckplatte 100 erneut nach oben in die Stellung gemäß Fig. 5. Dadurch wird der Blechstapel 98 zusammen mit dem um 180° gedrehten halben Blechpaket 96 wiederum zusammengedrückt, während sich die obere Druckplatte 24 mit ihren bolzenförmigen Vorsprüngen 50 an den jetzt mit diesen fluchtenden Zwischenbolzen 46 und Anschlagstangen 42 abstützt. In diesem zusammengedrückten Zustand gemäß Fig.5 befindet sich infolge der axialen Einstellung der Anschlagstangen 42 die obere Druckplatte 24 im Abstand einer Pakethöhe über dem Messer 36. Durch das seitlich gegen den Blechstapel 98 fahrende Messer 36 wird demnach eine volle Pakethöhe abgegriffen, und dieses vom oberen Ende des Blechstapels 98 abgenommene Blechpaket wird nach dem erneuten Absenken der unteren Druckplatte 100 durch Drehung des Rundtischs 10 zu einer Ablagestation transportiert und von dort aus weiter in bekannter Weise z.B. über eine Verbindungsstation zu einer Isoliervorrichtung, wo Isolierhülsen in die Nuten des Statorblechpakets eingesetzt werden.

Die vorstehend beschriebene Paketiervorrichtung hat den Vorteil, daß mittels des Verstellantriebs 78 die Lage der unteren Enden der Anschlagstangen 42 und 44 jederzeit während eines Arbeitszyklus verändert werden kann, solange die Anschlagstangen nicht durch die untere Druckplatte 100 mit Druck beaufschlagt sind. Es besteht also die Möglichkeit, z. B. während des Absenkens der unteren Druckplatte 100 nach dem Abgreifen eines Blechpakets die Lage der Anschlagstangen 42, 44 zu verändern, um beispielsweise im nächsten Arbeitszyklus ein Blechpaket mit einer anderen Anzahl Blechen vom Stapel 98 abzunehmen. Somit können im gleichen Arbeitstakt wie sonst bei der Fertigung von Blechpaketen konstanter Höhe abwechselnd mehrere verschiedene Blechpakete unterschiedlicher Höhe hergestellt werden, die jeweils verschiedenen Isoliervorrichtungen zugeführt werden, um dort unterschiedlich lange Isolierhülsen in die Statornuten einzusetzen. Außerdem kann ohne Unterbrechung des Arbeitstakts und ohne Korrektur der Abteilebene des Messers die Pakethöhe justiert werden, wenn eine Meßvorrichtung anzeigt, daß die Höhen mehrerer Pakete hintereinander einen bestimmten Grenzwert über- oder unterschreiten.

Die vorstehend beschriebenen und in der Zeichnung gezeigten Zwischenbolzen 46 und 48 sind für die Funktion der Vorrichtung nicht unbedingt notwendig. Mann könnte auch die Anschlagstangen 42 und 44 um die Länge der Zwischenbolzen 46, 48 verlängern. Dann müßte aber auch durch die Zylinder-Kolben-Einheit 84 und das Kniehebelgetriebe 86 oder einen anderen geeigneten Bewegungsantrieb ein entsprechend längerer Hub erzeugt werden, um die unteren Enden der Anschlagstangen 42, 44 aus der unteren, die Druckplatte 24 abstützenden Stellung bis in die in Fig. 1B gezeigte Stellung oberhalb der Oberkante des Paketierkopfs 12 zurückzuziehen. Durch die Zwischenbolzen 46, 48 wird somit der Vorteil gewonnen, daß die Anschlagstangen 42, 44 nur einen verhältnismäßig kurzen Hub auszuführen brauchen, um sich aus dem Paketierkopf 12 zurückzuziehen, so daß dieser durch den Rundtisch 10 von der gezeigten Paketaufnahmestation zur Abladestation gefahren werden kann.

Die Zwischenbolzen 46, 48 sitzen bei dem gezeigten Ausführungsbeispiel grundsätzlich axial frei verschieblich in passenden Bohrungen des Paketierkopfs 12. Sie werden dort durch an ihrem Umfang gleitend anliegende Federringe 104 reibschlüssig in jeder axialen Stellung solange gehalten, bis sie durch eine äußere axiale Kraft verschoben werden. An beiden Enden der Zwischenbolzen 46, 48 sind jeweils Ringnuten mit einer zur Bolzenmitte hin schrägen Seitenwand angebracht. Da die Federringe 104 in diese Nuten eingreifen, wenn die Zwischenbolzen 46, 48 genügend weit nach oben oder unten verschoben werden, sind diese gegen Herausgleiten aus den sie aufnehmenden Bohrungen gesichert.

Die drei bolzenförmigen Vorsprünge 50 an der Druckplatte 24 haben in Draufsicht dieselbe kreisförmige Konfiguration wie die Zwischenbolzen 46 gemäß Fig. 3. Darüberhinaus sind ebenfalls an der Oberseite der Druckplatte 24 zwischen den bolzenförmigen Vorsprüngen 50 drei im Durchmesser kleinere Stifte 106 angebracht, und zwar in derselben Anordnung wie die Zwischenbolzen 48 gemäß Fig. 3. Passend zu den Stiften 106 sind Bohrungen 108 in den unteren Enden der Zwischenbolzen 48 angebracht. Die Zwischenbolzen 46 haben keine derartigen Bohrungen. Durch die Stifte 106, welche dieselbe Höhe haben wie die bolzenförmigen Vorsprünge 50, wird erreicht, daß beim Abnehmen eines verhältnismäßig hohen Blechpakets unmittelbar nach der vorangegangenen Abnahme eines verhältnismässig kleinen Blechpakets in der relativen Drehwinkelstellung gemäß Fig. 4 beim Abgreifen der halben Pakethöhe die Zwischenbolzen 46 durch die Stifte 106 mindestens genauso weit nach oben zurückgeschoben werden wie die Zwischenbolzen 48 durch die bolzenförmigen Vorsprünge 50, so daß die letzteren bei der anschließenden Drehung des Aufnahmedorns 14 um 180° nicht gegen die vom vorhergehenden Arbeitstakt noch weit nach unten geschobenen Zwischenbolzen 46 stoßen. In der relativen Drehwinkelstellung nach Fig. 5 beim Abgreifen der vollen Pakethöhe stören die Stifte 106, die nunmehr mit den Zwischenbolzen 48 fluchten, nicht, da sie in die Bohrungen 108 eintreten können.

Es versteht sich, daß die vorstehend beschriebenen Einzelheiten in vielfältiger Weise konstruktiv abgewandelt werden können. So sind z.B. die gezeigten Antriebe ohne weiteres gegen andere, dieselbe Funktion ausführende Antriebe auswechselbar. Statt des gemeinsamen Antriebs für die Verstellung der Anschlagstangen 42 und 44 könnten auch zwei getrennte, nur steuerungstechnisch verknüpfte Antriebe vorhanden sein. Normalerweise ist auch nicht nur ein einziger Blechstapel 98 vorhanden, sondern ein Magazin mehrerer, z.B. auf einem drehschaltbaren Rundtisch angeordneter Blechstapel, die nacheinander unter den Aufnahmedorn 14 gefahren werden. Schließlich könnten die Gruppen von Anschlagstangen 42 bzw. 44 und Zwischenbolzen 46 bzw. 48 auch eine beliebige andere Zahl von Stangen bzw. Bolzen aufweisen, im Extremfall jeweils nur eine einzige Anschlagstange 42 bzw. 44 sowie einen einzigen Zwischenbolzen 46 bzw. 48, sofern nur die Voraussetzung erfüllt ist, daß ein oder mehrere Vorsprünge 50 an der Druckplatte 24 in deren beiden um 180° versetzten Drehwinkelstellungen jeweils mit den Anschlagstangen und Zwischenbolzen einer der beiden Gruppen fluchten.

**Patentansprüche**

1. Verfahren zur Abnahme von Paketen mit unterschiedlicher Anzahl gestanzter Bleche, z.B. für Statoren oder Rotoren elektrischer Maschinen, von einem zwischen Druckplatten (24, 100) unter Spannung zusammengedrückten Blechstapel (98) durch Abteilung der ersten Hälfte Bleche eines Pakets in einer durch einen ersten axialen Anschlag (44) der einen Druckplatte (24) und die axiale Lage eines von einer Seite gegen den Stapel andrückbaren Messers (36) bestimmten ersten Teilebene, Drehung der ersten abzunehmenden Hälfte Bleche (96) des Pakets um 180°, Wiedervereinigung mit dem Stapel (98) und Abteilung des gesamten Blechpakets in einer durch einen zweiten axialen Anschlag (42) der einen Druckplatte (24) und die Lage des Messers (36) bestimmten zweiten Teilebene, **dadurch gekennzeichnet,** daß die Pakete mit unterschiedlicher Anzahl Bleche zwischen denselben Druckplatten (24, 100) eingespannt und im gespannten Zustand zusammen mit der einen Druckplatte (24) an axial verstellbaren Anschlägen (42, 44) abgestützt werden.

2. Verfahren nach Anspruch 1, **dadurch gekennzeichnet,** daß die Einstellung einer bestimmten Pakethöhe während des Arbeitszyklus zur Abnahme des mit dieser Höhe herzustellenden oder des vorhergehenden Pakets erfolgt.

3. Verfahren nach Anspruch 1 oder 2 in Verbindung mit einem anschließenden Verfahren zum Einsetzen von Isolierhülsen in Nuten der Blechpakete, **dadurch gekennzeichnet,** daß abwechselnd Blechpakete mit zwei verschiedenen Höhen vom Stapel (98) abgenommen und im verketteten Arbeitsverfahren zwei verschiedenen Isolierstationen zugeführt werden, in denen jeweils die Nuten der Blechpakete einer bestimmten Höhe mit Isolierhülsen ausgekleidet werden.

4. Vorrichtung zur Durchführung des Verfahrens nach einem der Ansprüche 1 bis 3, bestehend aus einem Paar relativ zueinander bewegbaren Druckplatten (24, 100) zum Zusammendrücken eines Stapels (98) Bleche und einem von einer Seite gegen den Stapel (98) andrückbaren Messer (36), wobei die eine Druckplatte (24) zusammen mit der ersten Hälfte Bleche (96) eines Pakets um 180° drehbar und in beiden Drehwinkelstellungen über unterschiedliche Anschläge (42, 44) axial abstützbar ist, **dadurch gekennzeichnet,** daß die Anschläge (42, 44) axial verstellbar sind.

5. Vorrichtung nach Anspruch 4, **dadurch gekennzeichnet,** daß beide Druckplatten (24, 100) relativ zu den wirksamen Anschlagflächen der Anschläge (42, 44) axial beweglich sind.

6. Vorrichtung nach Anspruch 4 oder 5, **dadurch gekennzeichnet,** daß die unterschiedlichen Anschläge (42, 44) durch einen gemeinsamen Verstellantrieb (78, 66) gleichzeitig verstellbar sind.

7. Vorrichtung nach einem der Ansprüche 4 bis 6, **dadurch gekennzeichnet,** daß der Verstellantrieb (66) zwei Gewindeabschnitte (68, 70) aufweist, welche jeweils mit einem der Anschläge (42, 44) zusammenwirken und Gewindesteigungen haben, die im Verhältnis 1:2 stehen.

8. Vorrichtung nach einem der Ansprüche 4 bis 7, **dadurch gekennzeichnet,** daß die Anschläge aus zwei Gruppen von je drei Anschlagstangen (42, 44) bestehen, welche derart auf einem Kreisumfang angeordnet sind, daß drei an der einen Druckplatte (24) angeordnete, axiale Vorsprünge (50) in zwei gegenseitig um 180° versetzten Stellungen jeweils mit einer der beiden Gruppen der Anschläge (42, 44) fluchten.

9. Vorrichtung nach einem der Ansprüche 4 bis 8 mit einem Rundtisch (10) mit mehreren zwischen einer Paketierstation und einer Abgabestation verfahrbaren Paketierköpfen (12), die jeweils aus einem relativ zum Rundtisch (10) drehfesten Teil (16) und einem in der Paketierstation um 180° drehbaren Teil (14) bestehen, an dem eine Druckplatte (24) geführt ist, welche in der Paketierstation mit einer dort axial antreibbaren weiteren Druckplatte (100) und den Anschlägen (42, 44) zusammenwirkt, **da-**

**durch gekennzeichnet,** daß der drehfeste Teil (16) jedes Paketierkopfs (12) begrenzt axial verschiebliche Zwischenbolzen (46, 48) enthält, die zwischen den Vorsprüngen (50) an der Druckplatte (24) und den Anschlagstangen (42, 44) in Flucht mit diesen angeordnet sind.

10. Vorrichtung nach Anspruch 9, **dadurch gekennzeichnet,** daß die beim Abteilen der ersten Hälfte Bleche (96) eines Pakets wirksamen Zwischenbolzen (48) an dem zur Druckplatte (24) weisenden Ende mit einer axialen Bohrung (108) versehen sind, welche in der Stellung der Druckplatte (24) beim Abteilen des gesamten Blechpakets jeweils mit einem in die Bohrung (108) einführbaren, an der Druckplatte (24) angebrachten Stifts (106) etwa gleicher Länge wie die Vorsprünge (50) fluchten.

11. Vorrichtung nach Anspruch 9 oder 10, **dadurch gekennzeichnet,** daß die Zwischenbolzen (46, 48) durch an ihrem Umfang anliegende Federringe (104) axial reibschlüssig gehalten, aber durch die Anschlagstangen (42, 44) vorschiebbar und durch die Vorsprünge (50) und Stifte (106) an der Druckplatte (24) zurückschiebbar sind.

12. Vorrichtung nach einem der Ansprüche 9 bis 11, **dadurch gekennzeichnet,** daß die Anschlagstangen (42, 44) in jeder ihrer axialen Einstellungen aus einer aus dem Paketierkopf (12) zurückgezogenen Stellung in eine in den Paketierkopf hineinreichende Stellung vorschiebbar sind, in welcher sie formschlüssig (bei 88) fixierbar sind.

13. Vorrichtung nach Anspruch 12, **dadurch gekennzeichnet,** daß die Anschlagstangen (42, 44) durch ein Kniehebelgetriebe (86) axial verschiebbar sind, welches in der vorgeschobenen Stellung eine durch Anschlag (88) gesicherte Übertotpunktstellung einnimmt.

14. Vorrichtung nach einem der Ansprüche 9 bis 13, **dadurch gekennzeichnet,** daß der Paketierkopf (12) an seinem die Bleche aufnehmenden Ende mit Halteklinken (26) versehen ist, deren Betätigungsantrieb (34) seitlich neben dem Paketierkopf (12) angeordnet ist und an diesen zwischen zwei Zwischenbolzen (46, 48) hindurch radial heranfahrbar ist.

15. Vorrichtung nach einem der Ansprüche 4 bis 14, **dadurch gekennzeichnet,** daß sie mit mehreren Isolierstationen oder Isolierstraßen verkettet ist, zu denen jeweils ein sich vom vorhergehenden in der Höhe unterscheidendes Blechpaket transportierbar ist.

**Claims**

1. A method of removing sets of differing numbers of stamped sheets, for example for stators or rotors of electric machines, from a stack (98) of sheets, compressed between pressure plates (24, 100) while being clamped, by separating the first half of sheets of one set on a first partial plane defined by a first axial abutment (44) of one pressure plate (24) and the axial position of a knife (36) which can be pressed from one side against the stack, rotating through 180° the first half of sheets (96) of the set to be removed, reuniting with the stack (98) and separating the entire set of sheets on a second partial plane defined by a second axial abutment (42) of one pressure plate (24) and the position of the knife (36), characterised in that the sets of differing numbers of sheets are clamped between the same pressure plates (24, 100) and in the clamped condition are supported together with one pressure plate (24) against axially adjustable abutments (42, 44).

2. A method according to Claim 1, characterised in that the setting of a given set height takes place during the operating cycle for removal of the set to be established at this height or of the preceding set.

3. A method according to Claim 1 or 2 in conjunction with a subsequent method for inserting insulating sleeves in grooves in the sets of sheets, characterised in that sets of sheets of two different heights alternately removed from the stack (98) and in an interlinked operating method are fed to two different insulating stations, in which in each case the grooves of the sets of sheets of a given height are lined with insulating sleeves.

4. An apparatus for carrying out the method according to any one of Claims 1 to 3, comprising a pair of pressure plates (24, 100) movable relative to one another and for compressing a stack (98) of sheets, and a knife (36) which can be pressed from one side against the stack (98), wherein one pressure plate (24) together with the first half of sheets (96) of one set is rotatable through 180° and can be axially supported in both positions of angular rotation via different abutments (42, 44), characterised in that the abutments (42, 44) are axially adjustable.

5. An apparatus according to Claim 4, characterised in that both pressure plates (24, 100) are axially movable relative to the effective abutment surfaces of the abutments (42, 44).

6. An apparatus according to Claim 4 or 5, characterised in that the different abutments (42, 44) can be adjusted simultaneously by a common adjustment drive (78, 66).

7. An apparatus according to any one of Claims 4 to 6, characterised in that the adjustment drive (66) has two screw-threaded portions (68, 70) which respectively co-operate with one of the abutments (42, 44) and have thread pitches which have a ratio of 1:2.

8. An apparatus according to any one of Claims 4 to 7, characterised in that the abutments comprise two groups of respectively three abutment rods (42, 44) which are so arranged on the periphery of a circle that three axial projections (50) provided on one pressure plate (24) are aligned, in two positions mutually offset by 180°, respectively with one of the two groups of abutments (42, 44).

9. An apparatus according to any one of Claims 4 to 8, having a round table (10) with a plurality of stacking heads (12) which are movable between a stacking station and a delivery station and each of which comprises a part (16) fixed in rotation relative to the round table (10) and a part (14) rotatable through 180° in the stacking station and on which a pressure plate (24) is guided which co-operates in the stacking station with a further pressure plate (100) axially drivable therein and with the abutments (42, 44), characterised in that the part (16) of each stacking head (12) fixed in rotation includes intermediate pins (46, 48) which are displaceable axially to a limited extent and which are arranged between the projections (50) on the pressure plate (24) and the abutments (42, 44) in alignment therewith.

10. An apparatus according to Claim 9, characterised in that the intermedate pins (48), which are operative during the separation of the first half of plates (96) of one set, are provided at the end facing towards the pressure plate (24) with an axial bore (108), which in the position of the pressure plate (24) during the separation of the entire set of sheets are respectively in alignment with a stud (106) which can be inserted in the bore (108), which is mounted on the pressure plate (24) and which is approximately of the same length as the projections (50).

11. An apparatus according to Claim 9 or 10, characterised in that the intermediate pins (46, 48) are retained axially by frictional resistance by means of spring rings (104) applied against their periphery but can be moved forward by the abutment rods (42, 44) and can be moved back by the projections (50) and studs (106) on the pressure plate (24).

12. An apparatus according to any one of Claims 9 to 11, characterised in that in each of their axial settings the abutment rods (42, 44) can be moved forward from a position withdrawn from the stacking head (12) into a position extending into the stacking head, in which they can be fixed in a form-locking manner (at 88).

13. An apparatus according to Claim 12, characterised in that the abutment rods (42, 44) are axially displaceable by means of a toggle linkage (86) which in the advanced position occupies a position beyond dead centre assured by an abutment (88).

14. An apparatus according to any one of Claims 9 to 13, characterised in that at its end receiving the sheets the stacking head (12) is provided with retaining pawls (26) whose actuating drive (34) is disposed laterally close to the stacking head (12) and between two intermediate pins (46, 48) can be brought up to the latter radially therethrough.

15. An apparatus according to any one of Claims 4 to 14, characterised in that it is linked to a plurality of insulating stations or insulating lines, to each of which a set of sheets differing in height from the preceding one can be conveyed.

**Revendications**

1. Procédé pour l'enlèvement de paquets composés d'un nombre différent de tôles découpées, destinés à des stators ou des rotors de moteurs électriques, d'une pile de tôles (98) serrées les unes contre les autres sous tension en des plaques de compression (24, 100), par la séparation de la première moitié des tôles d'un paquet en un premier plan diviseur défini par une première butée axiale (44) de l'une des plaques de compression (24) et la position axiale d'un couteau (36) pouvant être serré contre la pile par un côté, la rotation de 180° de la première moitié à enlever des tôles (96) du paquet, le nouvel assemblage avec la pile (97) et la séparation de tout le paquet de tôles dans un deuxième plan diviseur défini par une deuxième butée axiale (42) de l'une des plaques de compression (24) et la position du couteau (36), caractérisé par le fait que les paquets comportant un nombre différent de tôles sont serrés entre les mêmes plaques de compression (24, 100) et, à l'état serré, viennent s'appuyer avec l'une des plaques de compression (24) sur des butées (42, 44) réglables axialement.

2. Procédé selon la revendication 1, caractérisé par le fait que le réglage d'une hauteur déterminée d'un paquet s'effectue pendant le cycle opératoire d'enlèvement du paquet de cette même hauteur ou pendant le cycle opératoire du paquet précédent.

3. Procédé selon la revendication 1 ou 2 associé à un procédé consécutif d'insertion de gaines isolantes dans des rainures des paquets de tôles, caractérisé par le fait que, alternativement, des paquets de tôles de deux hauteurs différentes sont enlevés de la pile (98) et amenés dans un processus opératoire en continu vers deux stations d'isolation différentes dans chaque desquelles les rainures des paquets de tôles d'une hauteur déterminée sont revêtues de gaines isolantes.

4. Dispositif pour la mise en oeuvre du procédé selon l'une des revendications 1 à 3, constitué d'une paire de plaques de compression (24, 100) mobiles l'une contre l'autre et destinées à assembler par compression une pile (98) de tôles et d'un couteau (36) pouvant être serré contre la pile (98) par un côté, l'une des plaques de compression (24) pouvant tourner de 180° en même temps que la première moitié des tôles (96) d'un paquet et pouvant venir s'appuyer axialement dans les deux positions de rotation sur différentes butées (42, 44), caractérisé par le fait que lesdites butées (42, 44) sont réglables axialement.

5. Dispositif selon la revendication 4, caractérisé par le fait que les deux plaques de compression (24, 100) peuvent être déplacées axialement par rapport aux faces de butée effectives desdites butées (42, 44).

6. Dispositif selon la revendication 4 ou 5, caractérisé par le fait que les butées différentes (42, 44) sont réglables simultanément au moyen d'un moteur de réglage commun (78, 66).

7. Dispositif selon l'une des revendications 4 à 6, caractérisé par le fait que le moteur de réglage (66) présente deux sections filetées (68, 70) dont chacune coopère avec l'une des butées (42, 44) et présente des pas de filetage dont le rapport est égal à 1:2.

8. Dispositif selon l'une des revendications 4 à 7, caractérisé par le fait que les butées sont constituées de deux groupes de trois tiges de butées (42, 44) respectivement lesquelles sont disposées sur une circonférence de telle sorte que trois projections axiales (50) disposées sur l'une des plaques de compression (24) s'alignent, dans deux positions décalées mutuellement de 180°, sur l'un des deux groupes respectivement des butées (42, 44).

9. Dispositif selon l'une des revendications 4 à 8, comportant un plateau (10) équipé de plusieurs têtes d'empaquetage (12) mobiles entre une station d'empaquetage et une station de remise, lesdites têtes étant constituées respectivement par une partie (16) fixe par rapport au plateau (10) et une partie (14) pouvant tourner de 180° dans la station d'empaquetage, sur ladite partie (14) étant guidée une plaque de compression (24) qui coopère, dans la station d'empaquetage, avec une plaque de compression (100) pouvant être entraînée axialement en cet emplacement et avec des butées (42, 44), caractérisé par le fait que la partie fixe (16) de chaque tête d'empaquetage (12) contient des entretoises (46, 48) mobiles axialement entre certaines limites et disposées entre les projections (50) sur la plaque de compression (24) et les tiges de butées (42, 44) avec lesquelles ces entretoises sont alignées.

10. Dispositif selon la revendication 9, caractérisé par le fait que les entretoises (48), dont l'action s'exerce lors de la séparation de la première moitié des tôles (96) d'un paquet, sont munies chacune d'un perçage axial (108), lesdits perçages axiaux (108) étant alignées, dans la position occupée par la plaque de compression (24) lors de la séparation de l'ensemble du paquet de tôle, avec une tige fixée sur ladite plaque de compression (24) et pouvant être introduite respectivement dans les perçages (108), ladite tige (106) ayant une longueur sensiblement identique à celle des projections (50).

11. Dispositif selon la revendication 9 ou 10, caractérisé par le fait que les entretoises (46, 48) sont maintenues axialement, par des bagues élastiques 104 appliquées sur leur pourtour, en position par frottement, mais qu'elles peuvent être avancées au moyen des tiges de butée (42, 44) et reculées au moyen des projections (50) et des tiges (106) fixées sur la plaque de compression (24).

12. Dispositif selon l'une des revendications 9 à 11, caractérisé par le fait que les tiges de butée (42, 44), dans chacune de leurs positions axiales, peuvent être avancées dans une position pénétrant dans la tête d'empaquetage à partir d'une position en retrait par rapport à ladite tête d'empaquetage (12), lesdites tiges pouvant être fixées dans cette position avancée (en 88).

13. Dispositif selon la revendication 12, caractérisé par le fait que les tiges de butée (42, 44) sont mobiles axialement par un mécanisme à genouillère (86) qui, dans la position avancée, occupe une position au delà du point mort assurée par une butée (88).

14. Dispositif selon l'une des revendications 9 à 13, caractérisé par le fait que la tête d'empaquetage (12) est munie, sur son extrémité recevant les tôles, de cliquets de maintien (26) dont le mécanisme de commande (34) est disposé latéralement à côté de la tête d'empaquetage (12) et peut être approché radialement de cette tête en passant entre deux entretoises (46, 48).

15. Dispositif selon l'une des revendications 4 à 14, caractérisé par le fait qu'il constitue le maillon d'une chaîne qui comprend plusieurs stations d'isolation ou trajets d'isolation vers lesquels peuvent être transportés des paquets de tôles dont chacun se différencie du paquet précédent par sa hauteur.

# Fig. 2    Fig. 1A

Fig.1B

Fig.3

# Fig. 4

# Fig. 5